# EUROPÄISCHE PATENTSCHRIFT

(11) **EP 0 855 861 B1**
(45) Veröffentlichungstag und Bekanntmachung des Hinweises auf die Patenterteilung: **07.11.2001**
(21) Anmeldenummer: 96930941.8
(22) Anmeldetag: 26.09.1996
(51) Int. Cl.: A21C 11/16, A23P 1/12

(54) **VERFAHREN UND ANLAGE ZUM KOCHEXTRUDIEREN VON PRODUKTEN VORZUGSWEISE FÜR DEN MENSCHLICHEN ODER TIERISCHEN KONSUM**
BOILER EXTRUSION PROCESS AND PLANT FOR PRODUCTS, PREFERABLY FOR HUMAN OR ANIMAL CONSUMPTION
PROCEDE ET INSTALLATION POUR EXTRUDER PAR EBULLITION DES PRODUITS DE PREFERENCE DESTINES A LA CONSOMMATION HUMAINE OU ANIMALE

(30) Priorität: 19.10.1995 CH 296195
(43) Veröffentlichungstag der Anmeldung: 05.08.1998
(73) Patentinhaber: Bühler AG, 9240 Uzwil (CH)
(72) Erfinder: MUNZ, Konrad, CH-8578 Neukirch an der Thur (CH)
(86) Internationale Anmeldenummer: CH9600336
(87) Internationale Veröffentlichungsnummer: WO9714312

(56) Entgegenhaltungen:
- DE-A- 3 818 422
- US-A- 5 120 559

## Beschreibung

Bei der Erfindung handelt es sich um ein Verfahren zum Kochextrudieren von Produkten, vorzugsweise für den menschlichen oder tierischen Konsum, indem eine vorgegebene Feststoffmenge vor dem Kochextrudieren mittels einer vorgegebenen Frischdampfmenge und einer vorgegebenen Wassermenge in einem Konditionierungsmittel vorkonditioniert wird, um das Produkt anzufeuchten und vorzuwärmen und in dem eine vorgegebene Wassermenge in einem, dem Konditionierungsmittel nachfolgenden Extruder gegeben und dabei ein einstellbarer Dampfdruck im Extruder erzeugt wird, um den Expansionsgrad des Extrudates zu beeinflussen, wobei die Regulierung dieses Dampfdruckes durch eine am Extruder örtlich und mengenmässig ausgelassene vorgegebene Dampfmenge erfolgt.

Die Anlage zur Durchführung des Verfahrens umfasst einen Extruder für das genannte Kochextrudieren, ein Konditionierungsmittel (auch Vorkonditionierungsmittel genannt) für das Anfeuchten und Vorwärmen des in den Extruder eingegebenen Produktes, ein das Konditionierungsmittel mit dem Extruder verbindender Produktübergang, ein Dosiermittel für das dosierte Einspeisen eines Rohproduktes in das Konditionierungsmittel, sowie eine Frischdampfzufuhr und je eine Wasserzufuhr in das Konditionierungsmittel und in den Extruder sowie einen Dampfauslass an einer vorgegebenen Stelle des Extruders.

Bei der Kochextrusion von Tierfutter, im speziellen Fischfutter und Pet-foods, sowie bei der Modifikation von Getreide, wird das Produkt mit Vorteil bei relativ hohem Wassergehalt zwischen 20 - 35 % und bei Temperaturen von 100 - 180° Celsius extrudiert.

Für eine gute Verkleisterung der Stärke sind vor allem die Parameter: Temperatur, Wassergehalt, Verweilzeit und Scherung (im Extruder) ausschlaggebend.

Um den Parameter "Zeit" in Abhängigkeit der Temperatur und Feuchtigkeit des zu bearbeitenden Produktes zu verlängern wird vor der Extrusion mit Vorteil eine Konditionierung (auch Vorkonditionierung genannt) eingesetzt. In einer solchen Konditionierung geschieht ein Befeuchten (auch Auffeuchten genannt) und Vorwärmen des später zu extrudierenden Produktes. Dabei muss diese Konditionierung derart geschehen, dass sich noch kein Plastifizieren des konditionierten Produktes einstellt.

Nach dem Konditionieren erfolgt der Kochprozess im Extruder oder wird darin fortgesetzt, indem die Temperaturen noch weiter erhöht werden können und eine Plastifizierung stattfindet.

Bei optimalen Extrusionsbedingungen bläht sich diese plastische Masse bei Temperaturen über 100 ° Celsius durch den damit verbundenen Dampfdruck sehr stark auf, um dann beim Austreten aus der Düse, am Ende des Extrudierverfahrens und dem damit verbundenen Austreten der Feuchtigkeit und Expandieren des Produktes sowie der damit verbundenen Abkühlung aufgrund des Expandierens, zu einer brotähnlichen schaumigen Struktur zu erstarren.

Die US-A-5120559 zeigt eine Vorrichtung und ein Verfahren zum Extrudieren von Lebensmitteln, wobei ein Teig einem Extruder zugeführt wird, der Koch-, Kühl- und Mischabschnitte enthält. Der zugeführte Teig wird gekocht, gekühlt und gemischt, wobei im Mischabschnitt superkritisches CO₂ zugeführt wird und mit dem Teig vermischt wird. Anschliessend expandiert der Teig nach passieren eines Extruderwerkzeuges. Die CO₂-Zufuhr erfolgt bei weniger als 100°C.

Der Expansionsgrad wird durch den Kochprozess bestimmt. Um die gegenseitige Beeinflussung des Kochens und der Formgebung zu trennen, wird im Extruder ein Dampfauslass an einer vorgegebenen Stelle eingebaut, durch dessen Öffnung der im Produkt vorhandene Dampf mit einem entsprechend dem gewünschten Produkt vorgegebenen Druck entweichen kann. Letztlich sinkt die Temperatur des Produktes durch das Verdampfen des Wassers, nach der formgebenden Düse, d.h. bei Atmosphärendruck, gegen 100 ° Celsius.

Mit der Regulierung des Dampfdruckes an diesem Dampfauslass kann der Expansionsgrad der Extrudate leicht beeinflusst werden. Das bei der Expansion verdampfende Wasser, welches bis 7% des Extruderdurchsatzes betragen kann, beinhaltet einen sehr grossen Energiegehalt.

Aufgabe der Erfindung war es deshalb diese Energie zurückzugewinnen, was erfindungsgemäss verfahrensmässig dadurch geschieht, dass der am vorgenannten Dampfauslass ausgelassene Dampf in die Konditionierung geführt wird. Anlagemässig wird erfindungsgemäss eine Verbindungsleitung vom vorgenannten Dampfauslass zu einer vorgegebenen Stelle des Konditionierungsmittels vorgesehen.

Die Vorteile der Erfindung liegen darin, dass einerseits eine entsprechende Menge an Frischdampf im Konditionierungsmittel gespart werden kann sowie andererseits darin, dass durch das Ausscheiden des Dampfes aus dem vor der Formung in der Düse stehenden Produkt dieses teilweise entwässert wird, wodurch weniger Luftmenge für das Trocknen des Produktes benötigt wird.

Ein weiterer Vorteil besteht darin, dass durch dieses Transferieren des aus dem Extruder ausgelassenen Dampfes in die Konditionierung eine Emission von Gerüchen und ein Niederschlagen der Feuchte, Fett und Staubteilen in die Umgebung oder in einer Entsorgung, total eliminiert wird, d. h., alle Geruchs- Feuchtigkeits- und Staubemissionen werden mit dieser Dampfrückführung vorteilhafterweise wieder in die Konditionierung und damit wieder in das Produkt zurückgeführt. Insbesondere bei der Produktion von kompakten Extrudaten lohnt es sich in den meisten Fällen eine Dampfrückführung vorzusehen, wobei wahlweise die Feststoffteile nach dem Dampfauslass in einen Feststoffabscheider ausgeschieden werden können. Je nach Rezept kann mit einer solchen Dampfrückführung bis gegen 80% des Frischdampfes gespart werden. Letztlich ist die Realisierung auch bei bereits bestehenden Anlagen äusserst einfach und billig.

Die Erfindung wird anhand eines schematisch dargestellten Beispieles näher erläutert.

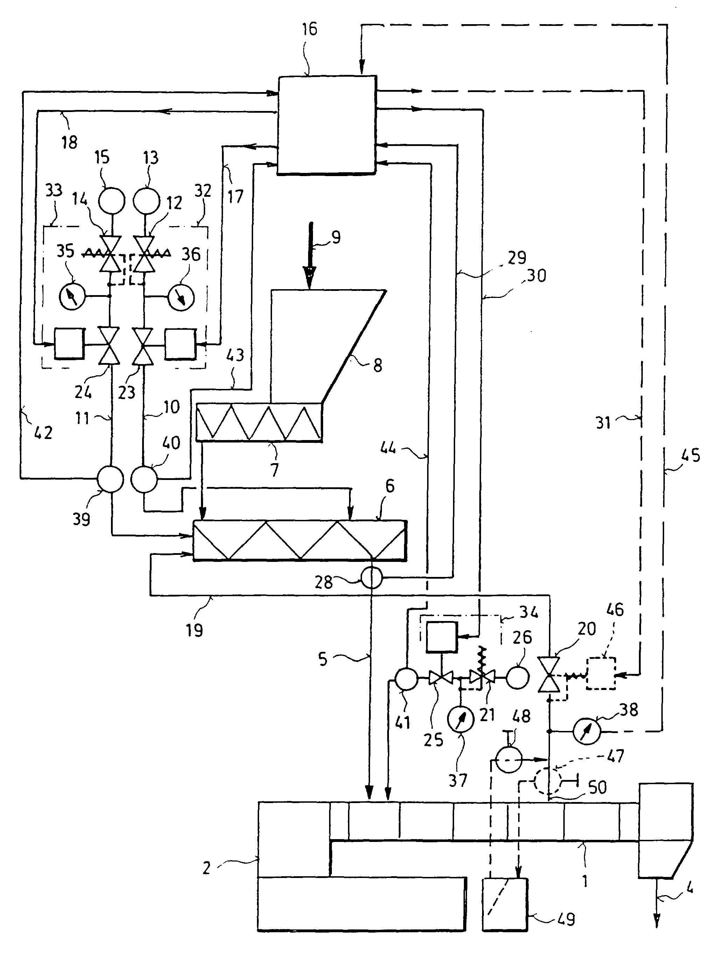

Die Figur zeigt einen Extruder 1 mit einem Antrieb 2 und einem Schneidapparat 3 am Austrittsendes des Extruders 1, sowie mit einem Produktaustritt 4. Der Extruder 1 erhält das zu verarbeitende Produkt von einem Konditionierungmittel 6 über einen Produktübergang.

Das Konditionierungsmittel ist in der Regel eine Mischschnecke, in welche das zu konditionierende Feststoffprodukt von einem Dosiermittel 7 eingespeist wird. Dabei wird das zu dosierende Festprodukt über eine Produkteingabe 9 in einen Produktrichter 8 eingegeben.

Im weiteren wird Frischdampf über eine Frischdampfzufuhr 10 und Wasser über eine Wasserzufuhr 11 ebenfalls in das Konditionierungsmittel 6 eingegeben, um zusammen mit dem Feststoffprodukt ein Gemisch von vorgegebener Feuchtigkeit und vorgegebener Wärme zu bilden. Zusätzlich kann dieses Gemisch durch zusätzliche Heizmittel am Konditionierungsmittels 6 auf eine vorgegebene Temperatur erwärmt werden. Die Temperatur dieses Gemisches wird im Produktübergang 5 mittels eines Temperatursensors 28 gemessen und angezeigt und/oder einer später erwähnten Steuerung 16 mittels einer Signalleitung 29 gemeldet.

Die Frischdampfzufuhr in das Konditionierungsmittel 6, wird durch ein erstes Steuermittel 32 dosiert, welches ein Druckregulierventil 12 und ein Stellventil 23 sowie ein Manometer 36 umfasst und den Frischdampf von einem Frischdampfnachschub 13 erhält.

Analoges gilt für die Wasserzufuhr in das Konditionierungsmittel 6 indem diese durch ein zweites Steuermittel 33 dosiert wird, welches ein Druckregulierventil 14 und ein Stellventil 24 sowie ein Manometer 35 umfasst und vom Wassemachschub 15 gespeist wird.

Ein drittes Steuermittel 34 für Wasser, steuert die Wasserzufuhr in den Extruder 1 und umfasst ein Druckregulierventil 21 und ein Stellventil 25 sowie ein Manometer 37 und wird von einem Wassemachschub 26 gespeist.

Alle drei Stellventile 23, 24 und 25 werden von einer Steuerung 16 gesteuert, um jeweils die erforderliche Menge Dampf bzw. Wasser an der entsprechenden Stelle einzuspeisen und sind beispielsweise im Handel erhältliche Motorventile, beispielsweise von der Marke "von Rohr". Dabei erhält das Stellventil 23 den Stellbefehl von der Steuerung 16 über eine Steuerleitung 17, das Stellventil 24 über eine Steuerleitung 18 und das Stellventil 25 über eine Steuerleitung 30. Dabei wird die jeweilige Frischdampfmenge von einem in der Frischdampfzufuhr 10 vorgesehenen Durchflussmengenmessgerät 40 gemessen und die Menge über eine Signalleitung 43 an das Steuergerät 16 gemeldet. Analoges besteht für die Wassermenge in das Konditioniermittel 6 und für die Wassermenge in den Extruder mit dem ebenfalls in der Figur gezeigten Durchflussmengenmessgerät 39 bzw. 41 und der Signalleitung 42 bzw. 44.

Genannte Druckregulierventile 12, 14 und 21 sind wie die Stellventile 23, 24 und 25 an sich bekannt und im Zusammenhang mit den ebenfalls bekannten, von der Anmelderin mit dem Markennamen "BI-EX" weltweit vertriebenen Extruder verwendet worden. Je nach zu verarbeitendem Produkt ist eine vorgegebene Drehzahl des Extruders, eine vorgegebene Motorenleistung des Antriebes 2 und eine vorgegebene Wasser bzw. Frischdampfmenge vorgesehen. Ändert pro Rezept die aufgenommene Leistung so wird die Wassermenge bzw. die Frischdampfmenge solange geändert bis die Motorenleistung bei vorgegebener Drehzahl wieder im vorgegebenen Bereich liegt.

Erfindungsgemäss ist im weiteren ein Verbindungsrohr 19 vorgesehen, welches mit einem Ende an einer vorgegebene Stelle, in der Regel im Endbereich gegen das Auslassende des Extruders (siehe Figur), mit einem Dampfauslass 50 und mit dem anderen Ende am Einlassende des Konditionierungsmittels 6 eingesetzt ist, um die vorgenannte Dampfrückführung vom Extruder 1 in das Konditionierungsmittel 6 durchzuführen.

Vorteilhafterweise ist im Verbindungsrohr 19 ein sogenanntes Druckeinhalteventil 20 vorgesehen, welches einen eingestellten Druck im Extruder einhält.

Der Druck an diesem Ventil 20 kann entweder von Hand oder über eine Steuerleitung 31 und einem Stellmotor 46 von der Steuerung 16 eingestellt werden, beispielsweise in Abhängigkeit eines von der Steuerung 16 gesteuerten Verarbeitungsrezeptes, mittels welchem noch weitere, hier nicht weiter erwähnte Maschinenparameter, wie beispielsweise Drehzahl und Leistung des Antriebes etc. gesteuert, beziehungsweise geregelt werden.

Im Betrieb wird aufgrund von Erfahrungswerten je nach Rezept, die Wasser- und Frischdampfmenge (mit einer vorgegebenen Wärmemenge) für das Konditionierungsmittel 6 und die Wassermenge für den Extruder 1, nebst den genannten anderen, hier nicht erwähnten Maschinenparameter eingestellt und das daraus entstehende Produkt am Produktaustritt 4, bezüglich Aussehen und Schüttgewicht geprüft.

Dabei kann die Temperatur des vom Konditionsmittel 6 kommenden Gemisches an einer Anzeige des Temperatursensors 28 von der Bedienungsperson überwacht oder von der Steuerung 16 gesteuert werden, indem die Frischdampfmenge in das Konditionierungsmittel 6 entsprechend angepasst wird, bis die Gemischtemperatur einen Sollwert aufweist.

Ist beispielsweise das Produkt zu hell und/oder hat es ein zu kleines Schüttgewicht (das heisst ungenügendes Gewicht einer mit Produkt gefüllten vorgegebener Sackgrösse) so wird der Druck am Ventil 20 reduziert, so dass eine kleinere Druckdifferenz zwischen Produkt und Atmosphäre nach der Düse im Schneidapparat 3 und damit eine verminderte Expansion und damit ein grösseres Schüttgewicht des Produktes entsteht.

Die dadurch grössere Menge an, in das Konditionierungsmittel 6 strömendem Dampf, wird durch eine entsprechend kleinere Menge Frischdampf aus der Leitung 10 kompensiert, welche aufgrund der vorgegebenen Produkttemperatur am Sensor 28, mittels der Steuerung 16 oder von Hand eingestellt wird. Das heisst, die Steuerung 16 oder die Bedienungsperson drosselt über das Stellventil 23 die Frischdampfmenge, bei gleichem, am Druckregulierventil 12 eingestellten Druck bis die Temperatur am Sensor den vorgegebenen Sollwert aufweist.

Die nichtgenannten Maschinenparameter, sowie die Wassermenge für das Konditionierungsmittel und die Wassermenge für den Extruder bleiben gleich eingestellt.

Wird der Druck am Druckhalteventil 20 mittels Stellmotor 46 von der Steuerung 16 eingestellt, so geschieht dies mittels eines Vergleichs eines in die Steuerung eingegebenen Sollwertes und einem von einem Manometer 38 abgegebenen und über die Leitung 45 in die Steuerung 16 eingegebenen IST-Wert.

Im weiteren kann der am Dampfauslass 50 ausgelassene Dampf, bevor dieser in die Verbindungsleitung 19 geführt wird, durch einen Feststoffausscheider 49 geführt werden. Dazu ist nach dem Dampfauslass 50 eine Umschaltklappe 47 vorgesehen, welche den ausgelassenen Dampf samt allfällig mitgerissenen Feststoffen in den Abscheider 49 leitet. Die Rückführung des "gereinigten" Dampfes vom Abscheider 49 in das Verbindungsrohr 19 geschieht durch eine geöffnete Verschlussklappe 48, welche, wenn der Abscheider 49 nicht benutzt wird, geschlossen ist. Im weiteren findet die Rückführung des sogenannt "gereinigten" Dampfes in das Verbindungsrohr vor dem an das Verbindungsrohr angeschlossenen vorgenannten Manometer 38 statt, welches seinerseits dem vorgenannten Druckeinhalteventil 20 im Verbindungsrohr 19 vorgegeben ist.

### Legende

- 1: Extruder
- 2: Antrieb
- 3: Schneidapparat
- 4: Produktaustritt
- 5: Produktübergang
- 6: Konditionierungsmittel (auch Vorkonditionierungsmittel genannt)
- 7: Dosiermittel
- 8: Produkttrichter
- 9: Produkteingabe
- 10: Frischdampfzufuhr
- 11: Wasserzufuhr
- 12: Druckregulierventil für Frischdampf
- 13: Frischdampfnachschub
- 14: Druckregulierventil für Wasser
- 15: Wassemachschub
- 16: Steuerung
- 17: Steuerleitung für Dampf
- 18: Steuerleitung für Wasser
- 19: Verbindungsrohr
- 20: Druckeinhalteventil
- 21: Druckregulierventil für Wasser
- 22: Stellventil
- 23: Stellventil
- 24: Stellventil
- 25: Stellventil
- 26: Wassernachschub
- 27: Steuerleitung
- 28: Produkttemperatursensor
- 29: Signalleitung
- 30: Steuerleitung für Wasser
- 31: Steuerleitung für Druckeinhalteventil
- 32: erstes Steuermittel für die Frischdampfmenge
- 33: zweites Steuermittel für die Wassermenge
- 34: drittes Steuermittel für die Wassermenge
- 35, 36, 37, 38: Manometer
- 39, 40 41: Durchflussmengenmessgerät
- 42, 43, 44, 45: Signalleitung
- 46: Stellmotor
- 47: Umschaltklappe
- 48: Verschlussklappe
- 49: Feststoff-Abscheider
- 50: Dampfauslass

## Patentansprüche

1. Verfahren zum Kochextrudieren von Produkten vorzugsweise für den menschlichen oder tierischen Konsum, indem eine vorgegebene Feststoffmenge vor dem Kochextrudieren mittels einer vorgegebenen Frischdampfmenge und einer vorgegebenen Wassermenge in einem Konditionierungsmittel vorkonditioniert wird um das Produkt anzufeuchten und vorzuwärmen und in indem eine vorgegebene Wassermenge in einen, der Konditionierung nachfolgenden Extruder gegeben und dabei ein einstellbarer Dampfdruck im Extruder erzeugt wird, um den Expansionsgrad des Extrudates zu beeinflussen, wobei die Regulierung dieses Dampfdruckes durch eine dem Extruder örtlich und mengenmässig vorgegebene, ausgelassene Dampfmenge erfolgt,
**dadurch gekennzeichnet**
**dass** der vorgenannte ausgelassene Dampf in die Konditionierung gegeben wird.

2. Verfahren nach Anspruch 1, **dadurch gekennzeichnet, dass** der Druck des Dampfes auf einen vorgegebenen Wert einstellbar ist.

3. Verfahren nach Anspruch 2, **dadurch gekennzeichnet, dass** der genannte Druck steuerbar ist.

4. Verfahren nach Anspruch 1, **dadurch gekennzeichnet, dass** die in die Vorkonditionierung eingegebene Frischdampfmenge in Abhängigkeit der vom Extruder herkommenden Dampfmenge dosiert wird.

5. Verfahren nach einem der vorangehenden Ansprüche, **dadurch gekennzeichnet, dass** die Temperatur des von der Konditionierung an den Extruder abgegebenen Produktes gemessen und als Richtwert für die genannte Frischdampfmenge genommen wird.

6. Verfahren nach einem der vorangehenden Ansprüche, **dadurch gekennzeichnet, dass** aus dem vorgenannten Dampf vor dem Eintritt in die Konditionierung die sich darin befindlichen Festteile ausgeschieden werden.

7. Anlage zum Kochextrudieren von Produkten, vorzugsweise für den menschlichen oder tierischen Konsum,
- mit einem Extruder (1) für das genannte Kochextrudieren,
- einem Konditionierungsmittel (6), (auch Vorkonditionierungsmittel genannt) für das Anfeuchten und Vorwärmen des in des Extruder (1) eingegebenen Produktes,
- mit einem das Konditionierungsmittel (6) mit dem Extruder (1) verbindenden Produktübergang (5),
- einem Dosiermittel (7) für das dosierte Einspeisen eines Rohrproduktes in das Konditionierungsmittel (6), sowie mit
- einer Frischdampfzufuhr (10) und
- einer Wasserzufuhr (11) in das Konditionierungsmittel (6) und
- einer Wasserzufuhr in den Extruder (1) und
- einem Dampfauslass (50) an einer vorgegebenen Stelle des Extruders (1),
**dadurch gekennzeichnet, dass** eine Verbindungsleitung (19) vom vorgenannten Dampfauslass (50) zu einer vorgegebenen Stelle des Konditionierungsmittel (6) vorgesehen ist.

8. Anlage nach Anspruch 7, **dadurch gekennzeichnet, dass** in der genannten Verbindungsleitung (19) ein einstellbares Druckeinhalteventil (20) sowie im genannten Produkteintrittsrohr (5) ein Produkttemperatursensor (28) vorgesehen ist.

9. Anlage nach Anspruch 8, **dadurch gekennzeichnet, dass** für den Frischdampf in das Konditionierungsmittel (6) ein erstes Mengensteuermittel (32) für das Wasser in das Konditionierungsmittel (6), ein zweites Mengensteuermittel (33) und für das Wasser in den Extruder (1), ein drittes Mengensteuermittel (34) sowie eine Steuerung (16) vorgesehen ist, welche die Frischdampfmenge aufgrund des genannten Temperatursensors (28) regelt.

10. Anlage nach Anspruch 9, **dadurch gekennzeichnet, dass** die Steuerung (16) die Wassermenge für das Konditionierungsmittel (6) und die Wassermenge für den Extruder (1) steuert.

11. Anlage nach Anspruch 7, **dadurch gekennzeichnet, dass** zwischen vorgenannten Dampfauslass (50) und der Verbindungsleitung (19) ein Feststoffabscheider (49) vorgesehen ist.

## Claims

1. A procedure for the boiler extrusion of products, preferably for human or animal consumption, by preconditioning a predetermined quantity of solids prior to boiler extrusion with a predetermined quantity of live steam and a predetermined quantity of water in a conditioner in order to wet and preheat the product, and by introducing a predetermined quantity of water in an extruder downstream from the conditioner, thereby generating an adjustable vapor pressure in the extruder in the process to influence the level of expansion of the extrudate, wherein this vapor pressure is controlled by a quantity of steam released locally in doses at the extruder,
**characterized by** the fact
that the aforementioned released steam is routed to the conditioner.

2. The procedure according to claim 1, **characterized by** the fact that the pressure of the steam can be set to a predetermined value.

3. The procedure according to claim 2, **characterized by** the fact that the mentioned pressure can be controlled.

4. The procedure according to claim 1, **characterized by** the fact that the live steam quantity supplied to the preconditioner is metered in as a function of the steam quantity coming from the extruder.

5. The procedure according to one of the preceding claims, **characterized by** the fact that the temperature of the product released to the extruder from the conditioner is measured and taken as an approximate value for the mentioned live steam quantity.

6. The procedure according to one of the preceding claims, **characterized by** the fact that solid particles are removed from the aforementioned steam prior to its entry into the conditioner.

7. The system for the boiler extrusion of products, preferably for human or animal consumption,
- with an extruder (1) for the cited boiler extrusion,
- a conditioner (6) (also called preconditioner) for wetting and preheating the product introduced into the extruder (1),
- with a product transition (5) linking the conditioner (6) and extruder (1),
- a dosing device (7) for the metered supply of a pipe product into the conditioner (6), and with
- a live steam feed (10), as well as
- a water feed (11) into the conditioner (6) and
- a water feed into the extruder (1) and
- a steam outlet (50) at a predetermined location of the extruder (1), **characterized by** the fact that a connecting line (19) running from the aforementioned steam outlet (50) to a predetermined location of the conditioner (6) is provided.

8. The system according to claim 7, **characterized by** the fact that an adjustable pressure maintenance valve (20) is provided in the mentioned connecting line (19), and a product temperature sensor (28) is provided in the mentioned product inlet pipe (5).

9. The system according to claim 8, **characterized by** the fact that a first quantity control means (32) is provided for the water in the conditioner (6), a second quantity control means (33) is provided for the water in the conditioner (6), and a third quantity control means (34) is provided for the water in the extruder (1), along with a controller (16) that regulates the live steam quantity based on the mentioned temperature sensor (28).

10. The system according to claim 9, **characterized by** the fact that the controller (16) controls the water quantity for the conditioner (6) and the water quantity for the extruder (1).

11. The system according to claim 7, **characterized by** the fact that a solids separator (49) is provided between the aforementioned steam outlet (50) and the connecting line (19).

## Revendications

1. Procédé pour l'extrusion par ébullition de produits, de préférence pour la consommation humaine ou animale, par lequel une quantité de matière solide prédéfinie est préconditionnée dans une installation de conditionnement, avant l'extrusion par ébullition, grâce à une quantité de vapeur fraîchement émise prédéterminée, afin d'humidifier et de préchauffer le produit et par lequel une quantité d'eau prédéterminée est versée dans une extrudeuse succédant à l'installation de conditionnement, une pression de vapeur réglable étant alors générée dans l'extrudeuse afin d'influer sur le degré d'expansion du produit extrudé, alors que la régulation de cette pression de vapeur se fait grâce à une quantité de vapeur prédéfinie émise localement et en quantités précises dans l'extrudeuse, **caractérisé en ce que** la vapeur émise mentionnée précédemment est envoyée dans l'installation de conditionnement.

2. Procédé selon la revendication 1, **caractérisé en ce que** la pression de la vapeur peut être réglée à une valeur prédéfinie.

3. Procédé selon la revendication 2, **caractérisé en ce que** ladite pression peut être régulée.

4. Procédé selon la revendication 1, **caractérisé en ce que** la quantité de vapeur fraîche envoyée dans l'installation de pré-conditionnement est dosée en fonction de la quantité de vapeur provenant de l'extrudeuse.

5. Procédé selon une des revendications précédentes, **caractérisé en ce que** la température du produit transféré par l'installation de conditionnement à l'extrudeuse est mesurée et est prise comme valeur indicative pour la quantité de vapeur fraîche mentionnée.

6. Procédé selon une des revendications précédentes, **caractérisé en ce que** les parties solides s'y trouvant sont éliminées de la vapeur mentionnée avant sa pénétration dans l'installation de conditionnement.

7. Installation pour extrusion par ébullition de produits, de préférence pour la consommation humaine ou animale,
- avec une extrudeuse (1) pour l'extrusion par ébullition mentionnée,
- une installation de conditionnement (6) (appelée aussi installation de pré-conditionnement) pour l'humidification et le préchauffage du produit mis dans l'extrudeuse (1),
- avec un passage pour transfert du produit (5) entre l'installation de conditionnement (6) et l'extrudeuse (1),
- un doseur (7) pour l'apport dosé de produit brut dans l'installation de conditionnement (6), ainsi qu'avec
- un système d'alimentation en vapeur (10) et
- un système d'alimentation en eau (11) de l'installation de conditionnement (6) et
- un système d'alimentation en eau de l'extrudeuse (1) et
- une sortie de vapeur (50) à un endroit prédéterminé de l'extrudeuse (1),
**caractérisé en ce qu'**une canalisation de liaison (19) est prévue entre la sortie de vapeur (50) mentionnée et un emplacement prédéfini de l'installation de conditionnement (6).

8. Installation selon la revendication 7, **caractérisée en ce que**, dans la canalisation de liaison mentionnée (19), une soupape réglable d'arrêt de pression (20), ainsi que, dans le tuyau précité d'entrée du produit (5), un capteur de température du produit (28) sont prévus.

9. Installation selon la revendication 8, **caractérisée en ce qu'**il est prévu, pour la vapeur fraîche envoyée dans l'installation de conditionnement (6) un premier système de dosage de quantité (32), pour l'eau envoyée dans l'installation de conditionnement (6), un deuxième système de dosage de quantité (33), et, pour l'eau envoyée dans l'extrudeuse (1), un troisième système de dosage de quantité (34), ainsi qu'une commande (16), qui régule la quantité de vapeur fraîche à partir du capteur de température mentionné (28).

10. Installation selon la revendication 9, **caractérisée en ce que** la commande (16) régule la quantité d'eau destinée à l'installation de conditionnement (6) et la quantité d'eau destinée à l'extrudeuse (1).

11. Installation selon la revendication 7, **caractérisée en ce qu'**entre la sortie de vapeur précitée (50) et la canalisation de liaison (19), se trouve un système d'élimination des matières solides (49).
